(19) Europäisches Patentamt
European Patent Office
Office européen des brevets

(11) **EP 0 668 325 B1**

(12) **EUROPÄISCHE PATENTSCHRIFT**

(45) Veröffentlichungstag und Bekanntmachung des Hinweises auf die Patenterteilung:
**15.04.1998 Patentblatt 1998/16**

(51) Int Cl.$^6$: **C08L 83/04**

(21) Anmeldenummer: **95102153.4**

(22) Anmeldetag: **16.02.1995**

(54) **Hitzestabilen Siliconkautschuk ergebende hydrosilylierungsvernetzende Massen**

Hydrosilylation-curable compositions for the provision of heat-stable silicone rubber

Compositions réticulables par hydrosilylation pour fournir des élastomères de silicone résistant à la chaleur

(84) Benannte Vertragsstaaten:
**BE DE ES FR GB IT NL**

(30) Priorität: **18.02.1994 DE 4405245**

(43) Veröffentlichungstag der Anmeldung:
**23.08.1995 Patentblatt 1995/34**

(73) Patentinhaber: **Wacker-Chemie GmbH**
**81737 München (DE)**

(72) Erfinder:
• **Achenbach, Frank, Dr.**
**D-84359 Simbach a. Inn (DE)**

• **Barthel, Herbert, Dr.**
**D-84547 Emmerting (DE)**

(56) Entgegenhaltungen:
**EP-A- 0 091 737        EP-A- 0 231 519**
**US-A- 4 701 488**

• **CHEMICAL ABSTRACTS, vol. 117, no. 22, 30.November 1992 Columbus, Ohio, US;**
**abstract no. 214261,**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft hydrosilylierungsvernetzende Siliconkautschukmassen, die zu einem Siliconkautschuk mit erhöhter Temperaturbeständigkeit vernetzen, weil sie einen Palladium-haltigen Hitzestabilisator enthalten, sowie die Verwendung von Palladium und dessen Verbindungen als Hitzestabilisator in hydrosilylierungsvernetzenden Siliconkautschukmassen.

Siliconkautschuke weisen eine im Vergleich zu organischen Elastomeren höhere thermische Stabilität auf. Dennoch führt eine längere, offene Lagerung von Siliconkautschuken bei Temperaturen oberhalb 200°C zu einer Versprödung genannten zunehmenden Einbuße an mechanischer Festigkeit und Elastizität. Bei Temperaturen oberhalb 300°C ist zudem ein rascher Gewichtsverlust zu verzeichnen, der mit einer Verkieselung des Siliconkautschuks einhergeht. Thermisch nichtstabilisierte Siliconkautschuke sind aus diesen Gründen von Anwendungen, die eine Beanspruchung bei Temperaturen ab 220°C über längere Zeit hinweg einschließen, nur bedingt geeignet. Als Ursachen des Verlustes der Elastomereigenschaften des Siliconkautschuks bei höheren Temperaturen kommen vor allem thermische und thermooxidative Veränderungen der organischen Seitengruppen der Polymerketten, unter Neubildung von Vernetzungsstellen, und Depolymerisationsvorgänge, wie Spaltung von SiOSi-Bindungen und Cyclenbildung in Frage.

Die thermische Stabilität von Siliconen läßt sich jedoch durch Zusatz sogenannter Hitzestabilisatoren, wie die Elemente und Verbindungen der Übergangsmetalle und Lanthaniden erheblich verbessern. Beispielsweise beschreibt die EP-A-231 519 den Einsatz von Acetylacetonaten als Hitzestabilisatoren für additionsvernetzende 2-Komponenten Siliconkautschukmassen von Kupfer, Zink, Aluminium, Eisen, Cer, Zirkon und Titan.

In der Wirksamkeit der verwendeten metallhaltigen Hitzestabilisatoren bestehen teils erhebliche Unterschiede. Diese Unterschiede in der Wirksamkeit der Metalle sind beisielsweise auch Folge der unterschiedlichen Applikationsformen, wie Metallstaub, Dispersion unlöslicher Metallverbindungen oder Silicon-lösliche Metallverbindungen und in der unterschiedlichen Zusammensetzung der zu stabilisierenden Siliconmaterialien, wie Siliconöle, peroxidisch-, kondensations-, additions-, oder strahlungsvernetzende Siliconelastomere begründet. Dennoch kann festgestellt werden, daß sich als hitzestabilisierend wirkende Metalle vor allem die 3d-Übergangsmetalle, insbesondere Ti, Mn, Fe, Co, Ni und Cu, die Nebengruppenelemente der IV. Periode, nämlich Ti, Zr und Hf, sowie die Lanthaniden, vor allem Ce erwiesen haben.

In der Veröffentlichung " Izv. Vyssh. Uchebn. Zaved., Khim. Khim. Tekhnol., 1992, 35(6), 66-71" sind Metallkomplexe einer makrocyclischen Triisoindol-benzen-Verbindung, die strukturell mit Phthalocyanin-Komplexen vergleichbar sind, und als Metalle wahlweise Zr, Y, Pd oder Al enthalten, als Stabilisatoren zur Erhöhung der thermischen Stabilität und Flammfestigkeit von kondensationsvernetzenden Siliconkautschuken beschrieben. Die Beurteilung der thermostabilisierenden Wirkung dieser Komplexverbindungen erfolgt nur anhand des Masseverlustes bei offener Lagerung bei 450°C, wobei die thermostabilisierende Wirksamkeit in der Reihenfolge der Metalle Al < Pd < Y < Zr zunimmt. Der bei einer Lagerung bei 450°C auftetende Masseverlust des Siliconkautschuks ist jedoch wenig aussagekräftig für den Erhalt der Elastomereigenschaften bei typischen oberen Gebrauchstemperaturen stabilisierter Siliconkautschuke, die zwischen 200°C und 300°C liegen. Die zum Vergleich herangezogene geringere thermostabilisierende Wirkung von $Ni_3O_4$ und $Co_2O_3$ und nahezu vergleichbare Wirkung der Metall-freien Triisoindol-benzen-Verbindung lassen vermuten, daß es sich vor allem um einen stabilisierenden Effekt der Triisoindol-benzen-Komponente in den Metallkomplexen handelt.

Es bestand die Aufgabe, besonders hitzestabile hydrosilylierungsvernetzende Siliconkautschukmassen bereitzustellen.

Palladium-haltige hydrosilylierungsvernetzte Siliconkautschuke weisen eine deutlich höhere thermische Stabilität auf, als Siliconkautschuke, die andere Metalle als hitzestabilisierenden Zusatz enthalten. Damit ist es möglich, die Gebrauchseigenschaften von Siliconkautschuken längere Zeit bei höheren Temperaturen als bisher Gegenstand der Erfindung sind Hydrosilylierungsvernetzende Siliconkautschukmassen enthaltend:

(I) Hitzestabilisator,

(II) Polyorganosiloxan mit mindestens zwei Alkenylgruppen pro Molekül,

(III) Polyorganosiloxan mit mindestens zwei SiH-Gruppen pro Molekül und

(IV) Platin oder Platinverbindungen enthaltenden Hydrosilylierungskatalysator, die dadurch gekennzeichnet sind, daß der Hitzestabilisator Palladium oder eine Palladiumverbindung oder eine Mischung verschiedener Palladiumverbindungen ist.

aufrechtzuerhalten. Insbesondere die mechanischen Elastomereigenschaften, wie Shore-A-Härte, Reißfestigkeit, komplexer dynamischer Modul unter Druckverformung, Reißdehnung und Weiterreißwiderstand bleiben nach Temperaturbelastung in besonders hohem Maße erhalten.

Hydrosilylierungsvernetzte Siliconkautschuke, die zum Zwecke der Hitzestabilisierung Palladium enthalten, sind je nach Palladium-Gehalt schwach-gelblich, gelblich-hellbraun bis dunkelbraun gefärbt. Bei genügend feiner Verteilung des Palladium-haltigen Hitzestabilisators wird die Transparenz des Siliconkautschuks nicht nachteilig verändert. Im Unterschied zu anderen Hitzestabilisatoren, wie Ruß, erweisen sich bereits sehr geringe Mengen an Palladium als ausreichend, um den gewünschten thermostabilisierenden Effekt zu erzielen.

Angesichts der zahlreichen Metalle und Metallverbindungen, deren hitzestabilisierende Wirksamkeit bekannt ist, ist es erstaunlich, daß die außerordentlich hohe hitzestabilisierende Wirksamkeit von Palladium und dessen Verbindungen bislang außer Acht geblieben ist. Die außergewöhnliche thermische Stabilität Palladium-haltiger hydrosilylierungsvernetzter Siliconkautschuke bei offener Lagerung unter Frischluftzufuhr ist jedoch insofern erstaunlich und unerwartet, als Palladium als Katalysator zur Totaloxidation organischer Verbindungen bekannt ist.

Der Palladiumhaltige Hitzestabilisator wird nachstehend als Bestandteil (I) bezeichnet. An sich kann das Palladium in beliebiger Form und auf beliebige Art und Weise in die Siliconkautschukmasse eingebracht werden. Die Wirksamkeit als Hitzestabilisator ist jedoch bei einer feinen Verteilung besser.

Als Bestandteil (I) kann elementares Palladium, wie Palladium-Pulver, kolloidales Palladium und Palladium-Schwarz, gegebenenfalls fixiert auf feinteiligen germaterialien, wie Aktivkohle, Ruß, Aluminiumoxid, Bariumsulfat oder -carbonat, Calciumsulfat oder -carbonat, Quarzmehl, pyrogener oder gefällter Kieselsäure verwendet werden. Die Korngröße der Palladiumpartikel bzw. der Trägermaterialien liegt vorzugsweise unter 100 μm, um eine feine Verteilung des Palladiums in der Siliconkautschukmasse zu gewährleisten.

Bestandteil (I) kann auch Palladium in Form seiner Verbindungen sein. Dabei wird die Palladiumverbindung, oder eine Mischung verschiedener Palladiumverbindungen, gegebenenfalls mit Hilfe eines Lösungsmittels, eines sungsmittelgemisches und/oder bei erhöhter Temperatur, in einem Bestandteil oder einer Mischung mehrerer Bestandteile der erfindungsgemäßen Siliconkautschukmasse gelöst, teilweise gelöst oder dispergiert. An sich können beliebige Palladiumverbindungen eingesetzt werden. Als Palladiumverbindungen werden vorzugsweise wasserfreie oder wasserhaltige Verbindungen der allgemeinen Formeln

$PdX_2$, $L_2PdX_2$, $L_2Pd_2X_2$, $L_4PdX_2$, $L_2PdX_4$, $PdL_4$, $M_2PdX_4$, $M_2PdX_6$,

eingesetzt, wobei

**X** ein Halogenid, wie Cl, Br und J, einen komplexen anorganischen Säurerest, wie $NO_2$, $NO_3$, 0.5 $SO_4$ und CN, einen Carbonsäurerest der allgemeinen Formel OCOR', in der R' einen nichtsubstituierten oder substituierten Alkyl-, Cycloalkyl- oder Arylrest mit 1-20 C-Atomen darstellt, insbesondere Acetat und Trifluoracetat, oder ein komplexierendes nichtsubstituiertes oder substituiertes organisches Anion, wie Acetylacetonat, Hexafluoracetylacetonat und 0.5 Phthalocyaninato, oder OH sein kann,

**L** einen Donor, der ausgewählt wird aus der Gruppe der stickstoffhaltigen Liganden, wie $NH_3$, primären, sekundären und tertiären Aminen der allgemeinen Formel $NR''_3$, in der R'' ein Wasserstoffatom, ein Alkyl-Cycloalkyl- oder Arylrest sein kann, Diamine oder Bipyridyl, aus der Gruppe der phosphorhaltigen Liganden, wie $PR''_3$ und $Ph_2P$-$(CH_2)n$-$PPh_2$, wobei n die Werte 1 oder 2 aufweist, CO, $H_2O$, Dimethylformamid, Dimethylsulfoxid, der Nitrile, insbesondere Dibenzonitril und Acetonitril, und der Diene, wie 0.5 Cyclooctadien und 0.5 Norbornadien,

**M** ein Wasserstoffatom, $NH_4$, ein Alkali- oder Erdalkalimetall, wie Li, Na, K, Cs oder 0.5 Ba bedeuten.

Die als Hitzestabilisator eingesetzten Palladiumverbindungen müssen nicht notwendigerweise direkt in Bestandteile der erfindungsgemäßen Siliconkautschukmasse eingemischt werden, sondern können zuvor in einem geeigneten Trägermedium gelöst oder dispergiert werden. Als Trägermedium eignen sich Materialien, die mit der erfindungsgemäßen Siliconkautschukmasse mischbar oder in dieser löslich sind oder in ihr fein verteilt werden können. Hierzu zählen z.B. Lösungsmittel, Lösungsmittelgemische, Organosiliciumverbindungen, wie Oligo- und Polyorganosiloxane, und feinteilige Füllstoffe, sowie Mischungen derselben.

Die Mehrzahl der oben aufgeführten Palladiumverbindungen ist in apolaren Medien, so auch in den unvernetzten Siliconkautschukmassen, nicht oder nur in geringem Maße löslich. Zwar lassen sich mit Hilfe geeigneter Lösungsmittel im allgemeinen homogene Mischungen herstellen, doch fällt beim Entfernen des Lösungsmittels die Palladiumverbindung häufig wieder aus, was eine gleichmäßig feine Verteilung des Palladiums verhindert. In der Literatur wurden zahlreiche Methoden beschrieben, um dennoch eine homogene Verteilung des Palladiums in apolaren Medien zu erzielen. Eine bevorzugte Möglichkeit besteht darin, der die Palladiumverbindung enthaltenden homogenen Mischung ein geeignetes Reduktionsmittel zuzusetzen, so daß elementares Palladium in kolloidaler Form gebildet wird, welches auch nach Entfernen des Lösungsmittels in dieser Form in dem Trägermaterial vorliegt. Als Reduktionsmittel können verwendet werden beispielsweise Wasserstoff, Kohlenmonoxid, Formaldehyd, Hydrazin und Hydrazinderivate, lineare oder verzweigte Alkohole mit 1-5 C-Atomen, Alkali- oder Erdalkalimetallformiate, -borhydride, -hydride, -alanate, insbesondere SiH-haltige Organosiliciumverbindungen, wie Silane und SiH-haltige Siloxane.

Eine weitere bevorzugte Möglichkeit, homogene Palladiumhaltige Mischungen herzustellen, besteht darin, geeignet funktionalisierte Siloxane, welche in unvernetzten Siliconkautschukmassen leicht löslich sind, mit Palladiumverbindungen zu Palladium-haltigen Siloxanen umzusetzen. Hierzu muß das Siloxan über wenigstens eine Gruppe verfügen, die eine ausreichend feste Bindung zum Palladium auszubilden vermag. Geeignete reaktionsfähige Gruppen sind beispielsweise Alkenylgruppen mit 1 bis 6 C-Atomen, wie Vinyl, Allyl und 5-Hexenyl, primäre, sekundäre oder tertiäre Aminogruppen, wie 3-Aminopropyl-, 4-Aminobutyl-, N-(2-Aminoethyl)-3-aminopropyl-, 3-(Cyclohexylamino) propyl- oder Pyridylgruppen.

Unlösliche Palladiumverbindungen, wie Palladium(II)-phthalocyanin, können auch in feinteiliger Form direkt in der unvernetzten Siliconkautschukmasse dispergiert werden.

Besonders bevorzugt ist die Verwendung Palladium-haltiger Kieselsäuren, die zugleich als aktiv verstärkende Füllstoffe im Siliconkautschuk wirksam sind. Als solcher Füllstoff wird feinteiliges Siliciumdioxid mit einem mittleren Primärpartikel-Durchmesser unter 1 µm eingesetzt, bevorzugt sind aktiv verstärkende, feinstteilige Kieselsäuren mit einer spezifischen Oberfläche von 25 bis 400 m²/g (Bestimmung nach der BET-Methode nach DIN 66131 und 66132), insbesondere gefällte oder pyrogene Kieselsäuren.

Die Herstellung der Palladium-haltigen Kieselsäuren kann derart erfolgen, daß der Kieselsäure die in einem geeigneten Lösungsmittel oder Lösungsmittelgemisch gelöste Palladiumverbindung zugesetzt wird oder die kolloidales Palladium in einem geeigneten Lösungsmittel oder Lösungsmittelgemisch zugesetzt wird oder die in einem geeigneten Lösungsmittel oder Lösungsmittelgemisch gelöste Palladiumverbindung der Kieselsäure zugesetzt und anschließend mit einem Reduktionsmittel zu Palladiumschwarz auf der Kieselsäure reduziert wird. Prinzipiell eignen sich hierfür alle die oben angegebenen Palladiumverbindungen, sofern diese eine ausreichende Löslichkeit im verwendeten Lösemittel oder Lösemittelgemisch aufweisen. Als Lösemittel können die oben genannten Lösemittel eingesetzt werden. Die Herstellung von kolloidalem Palladium in einem Lösemittel bzw. von Palladium-Schwarz auf der Kieselsäure kann wie oben erfolgen.

Eingesetzt werden können hierzu hydrophile Kieselsäuren oder Kieselsäuren, die mit einem hydrophob machenden Mittel, wie z.B. ein Silyliermittel, oberflächenbehandelt und hydrophobiert wurden. Als Silyliermittel können Organosiliciumverbindungen, wie unten genannt, eingesetzt werden. Werden hydrophobe Kieselsäuren eingesetzt, so ist der Einsatz von Palladiumverbindungen gelöst in organischen Lösemitteln, bevorzugt. Werden hydrophile Kieselsäuren eingesetzt, so können Palladiumverbindungen gelöst in organischen Lösemitteln oder in wässrigen Lösemitteln eingesetzt werden.

Organische Lösungsmittel oder Lösungsmittelgemische mit einem Siedepunkt bzw. Siedebereich von bis zu 120°C bei 0,1 hPa werden bevorzugt eingesetzt. Beispiele für solche Lösungsmittel sind Alkohole, wie Methanol, Ethanol, n-Propanol, iso-Propanol; Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Cyclohexan, Heptan, Oktan, Waschbenzin, Petrolether, Benzol, Toluol, Xylole; Ketone, wie Aceton, Methylethylketon, Methyl-isobutylketon; inerte Organosiliciumverbindungen, wie Siloxane, beispielsweise Hexamethyldisiloxan; Schwefelkohlenstoff und Nitrobenzol, oder Gemische dieser Lösungsmittel.

Bei Einsatz von wässrigen Lösemitteln ist die Verwendung von Palladium(II)-nitrat, Palladium(II)-sulfat, Palladium (II)(chlorid), Palladium(II)- verbindungen des Typs $M_2PdCl_4$, wobei M ein Li, Na oder K bezeichnet, Palladium(II)-acetat, Palladium(II)-trifluoracetat, Palladium(II)-acetylacetonat, Palladium-bis-(acetonitril)-dichlorid und Palladium-bis(benzonitril)-dichlorid bevorzugt.

Die Palladiumverbindungen können zugesetzt werden in Mengen bezogen auf den Füllstoff von 1 Gew.-ppm bis 10 Gew.-%, vorzugsweise 10 bis 5000 Gew.-ppm, insbesondere 50 bis 5000 Gew.-ppm, berechnet als Palladiumgehalt des Füllstoffs. Die Oberflächenbehandlung des Füllstoffs mit der Palladiumverbindung erfolgt durch intensives Vermischen der beiden Komponenten. Dies kann zum einen geschehen durch Einbringen, z.B. Einsprühen, von feinstverteilter, Palladium-haltiger flüssiger Komponente in die ruhende oder durch Rühren oder durch Wirbelbetttechniken fluidisierte Kieselsäure. Dies kann zum anderen geschehen durch Suspendieren, Rühren oder Dispergieren der Kieselsäure in einem geeigneten inerten Lösemittel und Zusatz der Palladium-haltigen flüssigen Komponente, beispielsweise gelöste Palladiumverbindung oder kolloidales Palladium und anschließendes intensives Vermischen durch Rühren und/oder Dispergieren und Scheren.

Dies kann vorzugsweise durchgeführt werden bei Temperaturen von -80°C bis höchstens einer Temperatur die um 10°C niedriger liegt als die Siedetemperatur des verwendeten Lösungsmittels, höchstens jedoch bei 350°C, insbesondere bei 0°C bis 200°C. Die Belegung erfolgt vorzugsweise bei Normaldruck und in einem Zeitraum von 5 Sekunden bis 24 Stunden, insbesondere 1 Min. bis 60 Min.

Der Oberflächenbehandlung des Füllstoffs mit einer Palladiumverbindung kann ein Ausheizschritt und Reinigungsschritt, z.B. von Lösemittel, angeschlossen sein. Der Ausheizschritt erfolgt vorzugsweise bei 0°C bis 350°C und in einem Zeitraum von 5 Min. bis 8 Stunden, vorzugsweise bei Drücken zwischen Normaldruck und 0,01 mbar.

Die Oberflächenbehandlung des Füllstoffs mit einer Palladiumverbindung kann zusammen mit einer Hydrophobierung des Füllstoffs durchgeführt werden. Zur Hydrophobierung des Füllstoffs kann ein hydrophob machendes Mittel, vorzugsweise eine Organosiliciumverbindung eingesetzt werden. Als Organosiliciumverbindung wird dabei bevorzugt solche der Formel

$$R_{4-x}^1 SiA_x \text{ oder } (R_3^1 Si)_y B,$$

eingesetzt, worin

$R^1$  gleich oder verschieden ist, einen einwertigen, gegebenenfalls halogensubstituierten Kohlenwasserstoffrest mit 1 bis 18 Kohlenstoffatomen je Rest,
$A$  Halogen, -OH, -OR$^2$ oder -OCOR$^2$,
$B$  $NR_{3-y}^3$,
$R^2$  einen einwertigen Kohlenwasserstoffrest mit 1 bis 12 Kohlenstoffatomen je Rest,
$R^3$  ein Wasserstoffatom ist oder die gleiche Bedeutung wie $R^1$ hat,
$x$  1, 2 oder 3 und
$y$  1 oder 2 bedeuten,

oder Organo(poly)siloxane aus Einheiten der Formel

$$R_z^1 SiO_{(4-z)/2} \text{ ,}$$

wobei

$R^1$  die oben dafür angegebene Bedeutung hat und
$z$  1, 2 oder 3 bedeutet.

Beispiele für Reste $R^1$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentyl-rest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl-, Naphthyl- und Anthryl- und Phenanthrylrest; Alkarylreste, wie o-, m-, p-Tolylreste, Xylylreste und Ethylphenylreste; und Aralkylreste, wie der Benzylrest, der alpha- und der β-Phenylethylrest. Beispiele für halogensubstituierte Kohlenwasserstoffreste sind mit Fluor-, Chlor- und Bromatomen substituierte Alkylreste, wie der 3,3,3-Trifluor-n-propylrest, der 2,2,2,2',2'-Hexafluorisopropylrest, der Heptafluorisopropylrest und der Perfluorhexylethylrest. Ein bevorzugtes Beispiel für $R^1$ ist der Methylrest.

Beispiele für Reste $R^2$ sind Alkylreste, wie der Methyl-, Ethyl-, n-Propyl-, iso-Propyl-, n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Arylreste, wie der Phenylrest; Alkarylreste, wie o-, m-, p-Tolylreste; und Aralkylreste, wie der Benzylrest. Bevorzugte Beispiele für $R^2$ sind der Methyl- und Ethylrest.

Beispiele für Organosiliciumverbindungen sind Alkylchlorsilane, wie Methyltrichlorsilan, Dimethyldichlorsilan, Trimethylchlorsilan, Octyltrichlorsilan, Octadecyltrichlorsilan, Octylmethyldichlorsilan, Octadecylmethyldichlorsilan, Octyldimethylchlorsilan, Octadecyldimethylchlorsilan, tert.-Butyldimethylchlorsilan; Alkylalkoxysilane, wie Dimethyldimethoxysilan, Dimethyldiethoxysilan, Trimethylmethoxysilan und Trimethylethoxysilan; Trimethylsilanol; cyclische Diorgano(poly)siloxane, wie cyclische Dimethyl(poly)siloxane und lineare Diorganopolysiloxane, wie durch Trimethylsiloxygruppen endblockierte Dimethylpolysiloxane und endständige Hydroxy- oder Alkoxygruppen aufweisende Dimethylpolysiloxane; Disilazane, wie Hexaalkyldisilazan, insbesondere Hexamethyldisilazan, Divinyltetramethyldisilazan und Bis(trifluorpropyl)tetramethyldisilazan; und cyclische Dimethylsilazane, wie Cyclohexamethyltrisilazan.

Insbesondere nützlich als Hydrophobierungsmittel sind niedermolekulare Cyclosiloxane, wie Octamethylcyclotetrasiloxan, kurzkettige SiOH-endständige Dimethylpolysiloxane mit einer Kettenlänge im Bereich von 2 bis 20, Silazane, wie Hexamethyldisilazan und 1,3-Divinyl-1,1,3,3-tetramethyldisilazan, Chlorsilane, wie Dimethyldichlorsilan.

Es können auch Gemische unterschiedlicher Organosiliciumverbindungen eingesetzt werden.

Die Hydrophobierung des Füllstoffs mit der Organosiliciumverbindung kann in einem vorausgehenden Schritt, im gleichen Schritt oder in einem weiteren anschließenden Schritt wie die Oberflächenbehandlung mit der Palladiumverbindung erfolgen durch intensives Vermischen der Komponenten und kann durchgeführt werden bei Temperaturen von 0°C bis 350°C. Die Belegung erfolgt im allgemeinen bei Normaldruck und in einem Zeitraum von 30 Sekunden bis 24 Stunden, bevorzugt 5 Minuten bis 60 Minuten. Der Schritt der Belegung mit der Palladiumverbindung und Organosiliciumverbindung kann direkt anschließend oder nach einer Reaktionsphase von 30 Sekunden bis 24 Stunden, bevorzugt 5 Minuten bis 60 Minuten bei Temperaturen von 60°C bis 250°C, gefolgt sein von einem Ausheizvorgang bei 0°C bis 400°C, bevorzugt 50°C bis 300°C, bei Drücken von 0,01 mbar bis Normaldruck. Sowohl Belegung als auch Ausheizen können sowohl kontinuierlich als auch diskontinuierlich betrieben werden.

Die erfindungsgemäße Siliconkautschukmasse weist einen Palladium-Gehalt von vorzugsweise mindestens 10 Gew.-ppm, besonders bevorzugt 30 Gew.-ppm, insbesondere 100 Gew.-ppm, bis vorzugsweise 10000 Gew.-ppm, besonders bevorzugt 3000 Gew.-ppm, insbesondere 1000 Gew.-ppm, jeweils bezogen auf elementares Palladium, auf.

Die erfindungsgemäßen Siliconkautschukmassen umfassen die Bestandteile:

(I) Hitzestabilisator,

(II) Polyorganosiloxan mit mindestens zwei Alkenylgruppen pro Molekül,

(III) Polyorganosiloxan mit mindestens zwei SiH-Gruppen pro Molekül und

(IV) Platin oder Platinverbindungen enthaltenden Hydrosilylierungskatalysator, mit der Maßgabe, daß der Hitzestabilisator Palladium oder eine Palladiumverbindung oder eine Mischung verschiedener Palladiumverbindungen ist.

Die Bestandteile der erfindungsgemäßen Siliconkautschukmassen werden zur Lagerung vorzugsweise zu mehreren, insbesondere zu 2 oder 3 Komponenten vermischt. Die Komponenten der erfindungsgemäßen Siliconkautschukmassen können die Bestandteile I bis IV und gegebenenfalls weitere Zusätze V in beliebigen Kombinationen und Mengenverhältnissen enthalten, mit der Maßgabe, daß eine Komponente nicht gleichzeitig die Bestandteile II, III und IV enthält.

Bestandteil (II) der erfindungsgemäßen Siliconkautschukmassen ist ein mindestens zwei Alkenylgruppen pro Molekül enthaltendes Polyorganosiloxan mit einer bevorzugten Viskosität bei 25°C im Bereich von 0,1 bis 500 000 Pa.s, vorzugsweise von 1 bis 1000 Pa.s , insbesondere von 1 bis 100 Pa.s.

Das Polyorganosiloxan (II) ist vorzugsweise aufgebaut aus Einheiten der Formel

$$R^4{}_a R^5{}_b SiO_{(4-a-b)/2},$$

wobei a 0, 1 oder 2 ist, b 0, 1, 2 oder 3 ist, mit der Maßgabe, daß mindestens zwei Alkenylgruppen $R^4$ in jedem Molekül vorhanden sind und die Summe $(a+b) < 4$ beträgt.

Als Alkenylgruppen können sämtliche einer Hydrosilylierungsreaktion mit einem SiH-funktionellen Vernetzungsmittel zugänglichen Alkenylgruppen gewählt werden. Vorzugsweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

$R^5$ stellt einen substituierten oder nichtsubstituierten, aliphatisch gesättigten, monovalenten Kohlenwasserstoffrest mit 1 bis 10 Kohlenstoffatomen, vorzugsweise 1 bis 6 Kohlenstoffatomen, dar. Beispiele hierfür sind die Alkylgruppen, wie Methyl, Ethyl, Propyl, Butyl und Hexyl, Cycloalkylgruppen, wie Cyclopentyl, Cyclohexyl und Cycloheptyl, Aryl- und Alkarylgruppen, wie Phenyl, Tolyl, Xylyl, Mesityl, Benzyl, beta-Phenylethyl und Naphthyl, oder halogensubstituierte Gruppen, wie 3,3,3-Trifluorpropyl, o-, p- und m-Chlorphenyl, Bromtolyl und beta-Cyanethyl.

Die Alkenylgruppen können in jeder Position der Polymerkette, insbesondere an den endständigen Siliciumatomen, gebunden sein.

Bestandteil (II) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane kann linear, cyclisch oder auch verzweigt sein. Verzweigte Polyorganosiloxane enthalten neben monofunktionellen Einheiten, wie $R^4 R^5{}_2 SiO_{1/2}$ und $R^5{}_3 SiO_{1/2}$, und difunktionellen Einheiten, wie $R^5{}_2 SiO_{2/2}$ und $R^4 R^5 SiO_{2/2}$, auch trifunktionelle Einheiten, wie $R^5 SiO_{3/2}$ und $R^4 SiO_{3/2}$, und/oder tetrafunktionelle Einheiten der Formel $SiO_{4/2}$, wobei $R^4$ und $R^5$ die oben dafür angegebene Bedeutung haben. Der Gehalt an diesen zu verzweigten Polyorganosiloxanen führenden tri- und/oder tetrafunktionellen Einheiten, der typischerweise sehr gering ist, d.h. weniger als 0,1 Mol-% beträgt, sollte 20 Mol-% nicht wesentlich überschreiten. Das Alkenylgruppen enthaltende Polyorganosiloxan kann auch Einheiten der allgemeinen Formel -OSi($R^6R^7$)$R^8$Si($R^6R^7$) O- enthalten, wobei sowohl $R^6$ als auch $R^7$ die vorstehend für $R^4$ und $R^5$ angegebene Bedeutung haben und $R^8$ einen bivalenten organischen Rest, wie Ethylen, Propylen, Phenylen, Diphenylen oder Polyoxymethylen, bezeichnet. Derartige Einheiten können bis zu einem Anteil von 50 Mol-% im Bestandteil (II) enthalten sein.

Besonders bevorzugt ist die Verwendung Vinylgruppen enthaltender Polydimethylsiloxane, deren Moleküle der Formel

$$(ViMe_2SiO_{1/2})_2(ViMeSiO)_a(Me_2SiO)_b$$

entsprechen, wobei a und b nichtnegative Zahlen sind und folgende Relationen erfüllen: a+1>0, 50<(a+b)<20000, vorzugsweise 200<(a+b)<1000, und 0<(a+1)/(a+b)<0,2.

Bestandteil (III) der erfindungsgemäßen Siliconkautschukmasse ist ein SiH-funktionelles Polyorganosiloxan, das aufgebaut ist aus Einheiten der nachfolgenden Formel

$$H_cR^5{}_dSiO_{(4-c-d)/2}{}'{}'$$

wobei c 0, 1 oder 2 ist, d 0, 1, 2 oder 3 ist, mit der Maßgabe, daß die Summe (c+d) < 4 ist und daß mindestens zwei siliciumgebundene Wasserstoffatome pro Molekül vorhanden sind.

Bevorzugt ist die Verwendung eines drei oder mehr SiH-Bindungen pro Molekül enthaltenden Polyorganosiloxans. Bei Verwendung eines nur zwei SiH-Bindungen pro Molekül aufweisenden Bestandteils (III) enthält das Alkenylgruppen enthaltende Polyorganosiloxan (II) vorzugsweise mindestens drei Alkenylgruppen pro Molekül.

Das Polyorganosiloxan (III) wird als Vernetzer eingesetzt. Der Wasserstoffgehalt des Vernetzers, welcher sich ausschließlich auf die direkt an Siliciumatome gebundenen Wasserstoffatome bezieht, liegt im Bereich von 0,002 bis 1,7 Gew.-% Wasserstoff, vorzugsweise zwischen 0,1 und 1,7 Gew.-% Wasserstoff.

Das Polyorganosiloxan (III) enthält vorzugsweise mindestens drei und vorzugsweise höchstens 600 Siliciumatome pro Molekül. Besonders bevorzugt ist die Verwendung von SiH-Vernetzern, die zwischen 4 und 200 Siliciumatome pro Molekül enthalten.

Die Struktur des Polyorganosiloxans (III) kann linear, verzweigt, cyclisch oder netzwerkartig sein. Lineare und cyclische Polyorganosiloxane (III) sind aus Einheiten der Formel $HR^5{}_2SiO_{1/2}$, $R^5{}_3SiO_{1/2}$, $HR^5SiO_{2/2}$ und $R^5{}_2SiO_{2/2}$ zusammengesetzt, wobei $R^5$ die vorstehend dafür angegebene Bedeutung hat. Verzweigte und netzwerkartige Polyorganosiloxane (III) enthalten zusätzlich trifunktionelle Einheiten, wie $HSiO_{3/2}$ und $R^5SiO_{3/2}$, und/oder tetrafunktionelle Einheiten der Formel $SiO_{4/2}$. Mit zunehmendem Gehalt an tri- und/oder tetrafunktionellen Einheiten weisen diese Vernetzungsmittel eine netzwerkartige, harzartige Struktur auf. Die im Polyorganosiloxan (III) enthaltenen organischen Reste $R^5$ werden üblicherweise so gewählt, daß diese mit den im Bestandteil (II) befindlichen organischen Resten verträglich sind, so daß die Bestandteile (II) und (III) mischbar sind.

Als Vernetzer können auch Kombinationen und Mischungen der hier beschriebenen Polyorganosiloxane (III) verwendet werden.

Besonders bevorzugte Polyorganosiloxane (III) haben die Formel

$$(HR^5{}_2SiO_{1/2})_e(R^5{}_3SiO_{1/2})_f(HR^5SiO_{2/2})_g(R^5{}_2SiO_{2/2})_h,$$

wobei die nichtnegativen ganzen Zahlen e, f, g und h folgende Relationen erfüllen: (e+f)=2, (e+g)>2, 5<(g+h)<200 und 0,1<g/(g+h)≦1.

Das Polyorganosiloxan (III) ist vorzugsweise in einer solchen Menge in der härtbaren Siliconkautschukmasse enthalten, daß das Molverhältnis von SiH-Gruppen zu Alkenylgruppen zwischen 0,5 und 5, vorzugsweise zwischen 1,0 und 3,0, liegt.

Bestandteil (IV) dient als Katalysator für die Additionsreaktion (Hydrosilylierung) zwischen den Alkenylgruppen des Bestandteils (II) und den siliciumgebundenen Wasserstoffatomen des Bestandteils (III). In der Literatur wurden zahlreiche geeignete Hydrosilylierungskatalysatoren beschrieben. Prinzipiell können alle üblicherweise in hydrosilylierungsvernetzenden Siliconkautschukmassen eingesetzten Hydrosilylierungskatalysatoren verwendet werden.

Als Hydrosilylierungskatalysator kann Platin, das ggf. auf feinteiligen Trägermaterialien, wie Aktivkohle, Aluminiumoxid oder Siliciumdioxid, fixiert ist, eingesetzt werden.

Vorzugsweise werden Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln ($PtCl_2 \cdot Olefin)_2$ und $H(PtCl_3 \cdot Olefin)$ verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel $(PtCl_2 \cdot C_3H_6)_2$, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbikarbonat in ethanolischer Lösung. Besonders bevorzugt sind Komplexe des Platins mit Vinylsiloxanen, wie sym-Divinyltetramethyldisiloxan.

Der Hydrosilylierungskatalysator kann auch in mikroverkapselter Form eingesetzt werden, wobei der den Katalysator enthaltende und im Polyorganosiloxan unlösliche feinteilige Feststoff beispielsweise ein Thermoplast, wie Polyesterharze und Siliconharze ist. Der Hydrosilylierungskatalysator kann auch in Form einer Einschlußverbindung, beispielsweise in einem Cyclodextrin, eingesetzt werden.

Die Menge des eingesetzten Hydrosilylierungskatalysators richtet sich nach der gewünschten Vernetzungsgeschwindigkeit sowie ökonomischen Gesichtspunkten. Bei Verwendung gebräuchlicher Platin-Katalysatoren liegt der Gehalt der härtbaren Siliconkautschukmasse bezogen auf Platin-Metall vorzugsweise im Bereich von 0,1 bis 500 Gew.-ppm, insbesondere von 10 bis 100 Gew.-ppm Platin-Metall.

Während die Bestandteile (I) bis (IV) notwendige Bestandteile der erfindungsgemäßen Siliconkautschukmasse sind, können wahlweise weitere Zusätze (V) zu einem Anteil von bis zu 70 Gew.-%, vorzugsweise von 0,01 bis 40 Gew.-%, in der Siliconkautschukmasse enthalten sein. Diese Zusätze können z.B. Füllstoffe, Dispergierhilfsmittel, Haftvermittler, Inhibitoren, Pigmente, Farbstoffe, Weichmacher usw. sein.

Beispiele für Füllstoffe sind verstärkende Füllstoffe, also Füllstoffe mit einer spezifischen Oberfläche nach BET von mindestens 50 $m^2$/g, vorzugsweise 100 - 400 $m^2$/g, wie pyrogen erzeugte Kieselsäure, unter Erhalt der Struktur entwässerte Kieselsäurehydrogele, also sogenannte "Aerogele", und andere Arten von gefälltem Siliciumdioxid; und nicht verstärkende Füllstoffe, also Füllstoffe mit einer spezifischen Oberfläche nach BET von weniger als 50 $m^2$/g, wie Quarzmehl, Diatomeenerde, Calciumsilikat, Zirkoniumsilikat, Zeolithe, Tone, Metalloxide, wie Eisenoxid, Zinkoxid, Titandioxid und Aluminiumoxid, Metallcarbonate, wie Calciumcarbonat und Magnesiumcarbonat, Zinkcarbonat, Metallsulfate, wie Calciumsulfat und Bariumsulfat, Lithophone, Glimmer, Kreide und Fasern. Die genannten Füllstoffe können hydrophobiert sein durch die Behandlung mit den vorstehend genannten Hydrophobierungsmitteln.

Um eine ausreichend hohe mechanische Festigkeit des Siliconkautschuks zu erzielen, ist es bevorzugt, aktiv verstärkende Füllstoffe in die Siliconkautschukmassen einzuarbeiten. Die Verwendung hydrophober Füllstoffe ist besonders vorteilhaft, da diese auf einfache Weise direkt in den Bestandteil (II) eingemischt werden können, während sich beim Einmischen hydrophiler Füllstoffe die Zugabe eines Hydrobhobierungsmittels erforderlich macht. Verfahren zur Herstellung hydrophober Füllstoffe und deren Verwendung in Siliconkautschuken sind an sich bekannt. Der bevorzugte Gehalt der härtbaren Siliconkautschukmasse an aktiv verstärkendem Füllstoff liegt im Bereich von 0 bis 60 Gew.-%, vorzugsweise bei 10 bis 40 Gew.-%.

Beispiele für Weichmacher sind bei Raumtemperatur flüssige, durch Triorganosiloxygruppen endblockierte Diorganopolysiloxane, wie durch Trimethylsiloxygruppen endblockierte Dimethylpolysiloxane mit einer Viskosität von 10 bis 10 000 mPa·s bei 25°C.

Insbesondere können als Bestandteil (V) harzartige Polyorganosiloxane, die im wesentlichen aus Einheiten der Formeln $R^5_3SiO_{1/2}$, $R^5SiO_{3/2}$ und/oder $SiO_{4/2}$, ggf. auch $R^5_2SiO_{2/2}$, bestehen, bis zu einem Anteil von 70 Gew.-%, vorzugsweise bis zu 40 Gew.-%, bezogen auf das Gesamtgewicht des Siliconkautschuks, enthalten sein. Das Molverhältnis zwischen monofunktionellen und tri- oder tetrafunktionellen Einheiten dieser harzartigen Polyorganosiloxane liegt vorzugsweise im Bereich von 0,5 : 1 bis 1,5 : 1. Es können auch funktionelle Gruppen, insbesondere Alkenylgruppen, in Form von $R^4R^5_2SiO_{1/2}$- und/oder $R^4R^5SiO_{2/2}$-Einheiten, enthalten sein.

Die erfindungsgemäßen Siliconkautschukmassen können als Bestandteil (V) insbesondere Zusätze enthalten, die der gezielten Einstellung der Verarbeitungszeit und Vernetzungsgeschwindigkeit der härtbaren Siliconkautschukmasse dienen. Diese an sich bekannten Inhibitoren und Stabilisatoren sind beispielsweise: acetylenische Alkohole, wie Ethinylcyclohexanol und 2-Methyl-3-butin-2-ol, Polymethylvinylcyclosiloxane, wie Methylvinylcyclotetrasiloxan, niedermolekulare Siloxanöle mit Vinyldimethylsiloxy-Endgruppen, Trialkylcyanurate, Alkylmaleate, wie Diallylmaleat und Dimethylmaleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, Benzotriazol, organische Sulfoxide, organische Amine und Amide, Phosphine, Phosphite, Nitrile, Diaziridine und Oxime.

Die erfindungsgemäßen Siliconkautschukmassen können als Bestandteil (V) auch an sich bekannte Hitzestabilisatoren, wie Ruß, Graphit, Metallstäube, Ti-, Mn-, Fe-, Co-, Ni-, Cu-, Zr-, Hf- und Ce-Verbindungen enthalten. Da die verschiedenen Hitzestabilisatoren teils unterschiedliche Wirkmechanismen besitzen, kann oftmals durch deren Kombination ein höherer thermostabilisierender Effekt, z.B in Bezug auf einzelne mechanische Eigenschaften erzielt werden, als bei Verwendung eines einzigen Hitzestabilisators.

Gegenstand der Erfindung ist auch die Verwendung von Palladium und dessen Verbindungen als zum Schutz von durch Hydrosilylierung vernetzenden Siliconkautschukmassen gegen Versprödung bei Temperaturen oberhalb von 200 °C.

Die Herstellung der erfindungsgemäßen Siliconkautschukmassen erfolgt dadurch, daß die Bestandteile (I) bis (IV) und gegebenenfalls (V) intensiv miteinander vermischt werden. Vorzugsweise werden die Bestandteile zu mehreren, vorzugsweise 3 oder insbesondere 2 Komponenten vermischt, wobei nur in einer der Komponenten der SiH-Gruppen aufweisende Bestandteil (III) enthalten ist und einer anderen der Hydrosilylierungskatalysator (IV), so daß erst nach Vermischen dieser beiden Komponenten eine Aushärtung, bzw. Vernetzung der Siliconkautschukmasse zu einem Siliconkautschuk erfolgen kann. Der Gehalt der Komponenten an den übrigen Bestandteilen kann beliebig gewählt werden. Die Reihenfolge des Vermischens der Bestandteile kann beliebig gewählt werden, doch hat sich bei Verwendung eines Füllstoffs als Bestandteil (V) die nachfolgend beschriebene Verfahrensweise als vorteilhaft erwiesen. In einem ersten Schritt wird der Füllstoff mit dem Alkenylgruppen enthaltenden Polyorganosiloxan (II) zu einem einheitlichen Gemisch, der Grundmasse, vermischt. Die Einarbeitung des Füllstoffs in das Polyorganosiloxan (II) erfolgt in einem geeigneten Mischer, z.B. einem Kneter. Je nach Hydrophobizität des Füllstoffs (hydrophob oder hydrophil), lassen sich zwei Arten der Füllstoffeinarbeitung, d.h. der Herstellung der Grundmasse, unterscheiden.

Verfahren A:

Hydrophobe Füllstoffe können direkt, d.h. ohne weitere Zusätze, mit dem Alkenylgruppen enthaltenden Polyorganosiloxan (II) vermischt werden. Erhöhte Temperaturen sowie ein möglichst hoher Füllstoffgehalt während des Vermischens wirken sich vorteilhaft auf die Dispergiergeschwindigkeit und Dispergiergüte des Füllstoffs im Organopolysiloxan (II) aus. Das Einmischen des Füllstoffs in das Polyorganosiloxan erfolgt aus diesem Grund vorzugsweise bei einer Temperatur im Bereich von 100°C bis 200°C, insbesondere von 140°C bis 160°C. Vorteilhafterweise wird zunächst durch sukzessives Zumischen des Füllstoffs zu einer geeigneten Teilmenge des Polyorganosiloxans (II) eine möglichst hochviskose Mischung hergestellt, die durch Anwendung ausreichend hoher Scherkräfte eine optimale Destrukturierung und Dispergierung des Füllstoffs ermöglicht. Die hochviskose Mischung wird meistens während 0,5 bis 5 Stunden bei obigen Temperaturen, ggf. unter Vakuum, geschert. Die Dauer des Mischprozesses ist abhängig u.a. von der Menge, der Viskosität und den Scherparametern. Anschließend wird durch Zugabe der restlichen Polyorganosiloxanmenge und intensives Vermischen der gewünschte Füllstoffgehalt eingestellt. Der Füllstoffgehalt liegt im Bereich von 0 bis 60 Gew.-%, vorzugsweise im Bereich von 10 bis 40 Gew.-%. Gegebenenfalls können auch Bestandteile (I), (IV) und (V) bei der Herstellung der Grundmasse mit eingearbeitet werden.

Verfahren B:

Die Herstellung von Grundmassen für hydrosilylierungsvernetzende Silikonkautschukmassen unter Verwendung hydrophiler Füllstoffe erfolgt, indem das Vermischen des Füllstoffs mit Bestandteil (II) und gegebenenfalls auch anderer Bestandteile in Anwesenheit eines geeigneten Hydrophobierungsmittels erfolgt. Geeignete Hydrophobierungsmittel sind vorstehend beschrieben. Die im Hydrophobierungsmittel enthaltenen organischen Reste werden vorteilhafterweise so gewählt, daß diese mit den im Bestandteil (II) befindlichen organischen Resten weitgehend verträglich sind, was eine optimale Dispergierung des Füllstoffs im Polyorganosiloxan erleichtert und einer guter Fließfähigkeit der Grundmasse förderlich ist. Durch Zugabe geringer Mengen Wasser kann der Hydrophobierungsprozeß beschleunigt werden.

100 Gewichtsteile Polyorganosiloxan (II) können mit 1 bis 150 Gewichtsteilen Füllstoff, vorzugsweise mit 30 bis 80 Gewichtsteilen Füllstoff, vermischt werden. Die einzusetzende Menge an Hydrophobierungsmittel richtet sich u.a. nach der Art des Hydrophobierungsmittels, dem Füllstoffgehalt der Mischung, dem Silanolgruppengehalt des Füllstoffs, sowie dem gewünschten Hydrophobierungsgrad. Bei Verwendung von Hexamethyldisilazan liegt die Einsatzmenge im Bereich von 1 bis 20 Gew.-%, vorzugsweise von 5 bis 10 Gew.-%, bezogen auf die Füllstoff/Polyorganosiloxan-Mischung. Wasser kann zu 5 bis 100 Gew.-%, bezogen auf die Menge an Hydrophobierungsmittel, zwecks Beschleunigung des Reaktionsablaufs zugegeben werden. Gebildete Nebenprodukte, wie Ammoniak, Alkohole und Hexamethyldisiloxan, und andere flüchtige Bestandteile, wie Wasser und niedermolekulare Organosiloxane, werden im Anschluß an die in situ-Hydrophobierung des Füllstoffs durch eine Hitzebehandlung des Gemisches bei einer Temperatur im Bereich von 120°C bis 200°C während 2 bis 8 Stunden, vorzugsweise im Bereich von 130°C bis 160°C während 3 bis 5 Stunden, vorteilhafterweise unter Vakuum und fortwährendem Kneten, entfernt.

In einem zweiten Schritt werden durch Zumischen zu der nach nach Verfahren A oder B hergestellten Grundmasse mindestens zwei Komponenten hergestellt, wobei jede der Komponenten alle oder einen Teil der Bestandteile (I) bis (IV) und gegebenenfalls (V) enthalten kann, mit der Maßgabe, daß keine Komponente gleichzeitig die Bestandteile (II), (III) und (IV) enthält. Zweckmäßig und bevorzugt ist die Auftrennung in eine das SiH-funktionelle Vernetzungsmittel (III) enthaltende und eine den Hydrosilylierungskatalysator (IV) enthaltende Komponente, so daß erst nach Vermischen derselben eine Aushärtung der Masse zu einem Siliconkautschuk erfolgen kann.

Die erfindungsgemäßen Siliconkautschukmassen eignen sich besonders zur Herstellung hochtemperaturbeständiger Siliconkautschukgegenstände, wie Dichtungen, Dichtungsmaterialien, elektrische Isolationsmaterialien, hitzebeanspruchte Transportbänder, Walzenbeläge, Schläuche und Folien.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 20°C, bzw. bei einer Temperatur, die sich beim Zusammengeben der Reaktanden bei Raumtemperatur ohne zusätzliche Heizung oder Kühlung einstellt, durchgeführt. Des weiteren beziehen sich alle Angaben von Teilen und Prozentsätzen, soweit nichts anderes angegeben ist, auf das Gewicht.

**1. Herstellung Pd-haltiger Hitzestabilisatoren und nichterfindungsgemäße Vergleichsbeispiele**

Beispiel 1:

Zu 100 g einer pyrogenen Kieselsäure mit einer spezifischen Oberfläche nach BET von 300 m$^2$/g (erhältlich bei Fa. Wacker-Chemie GmbH unter dem Namen Wacker HDK[R] T30) wurden 10 g einer 1.67 %igen wäßrigen Salzsäure mit einem Gehalt an 8.4 g/kg Palladium(II)-chlorid sowie 45 g Hexamethyldisilazan (erhältlich bei Fa. Wacker-Chemie GmbH unter dem Namen Silazan HMN) bei 25°C zugemischt. Nach 30 Minuten Homogenisieren bei 25°C und 1 Stunde Ausheizen bei Normaldruck unter Stickstoffstrom bei 150°C sowie 1 Stunde Ausheizen bei Normaldruck unter Stickstoffstrom bei 250°C wurde ein gelblichweißes Pulver erhalten, das einen Kohlenstoffgehalt von 3.7 Gew.-% und einen Palladiumgehalt von 430 Gew.-ppm aufwies.

Die Herstellung der Siliconkautschukprobe unter Verwendung dieser Kieselsäure erfolgte auf die nachstehend unter 2.1, 3 und 4 beschriebe Weise.

Beispiel 2:

Zu 100 g einer pyrogenen Kieselsäure mit einer spezifischen Oberfläche nach BET von 300 m$^2$/g (erhältlich bei Fa. Wacker-Chemie GmbH unter dem Namen Wacker HDK[R] T30) wurden 10 g einer 1.67 %igen wäßrigen Salzsäure mit einem Gehalt an 8.4 g/kg Palladium(II)-chlorid bei 25°C zugemischt. Nach 30 Minuten Homogenisieren bei 25°C und 1 Stunde Ausheizen bei Normaldruck unter Stickstoffstrom bei 250°C wurde ein gelblich-braunes Pulver erhalten, das einen Kohlenstoffgehalt von 0.01 Gew.-% und einen Palladiumgehalt von 460 Gew.-ppm aufwies.

Die Herstellung der Siliconkautschukprobe unter Verwendung dieser Kieselsäure erfolgte auf die unter 2.2, 3 und 4 beschriebene Weise.

Vergleichsbeispiel 3 (nicht erfindungsgemäß):

Zu 100 g einer pyrogenen Kieselsäure mit einer spezifischen Oberfläche nach BET von 300 m$^2$/g (erhältlich bei Fa. Wacker-Chemie GmbH unter dem Namen Wacker HDK[R] T30) wurden 10 g einer 0.1 n wäßrigen Salzsäure mit einem Gehalt von 13 g/kg Kupfer(II)-chlorid-Dihydrat sowie anschließend 45 g Hexamethyldisilazan (erhältlich bei Fa. Wacker-Chemie GmbH unter dem Namen Silazan HMN) bei 25°C zugemischt. Nach 30 Minuten Homogenisieren bei 25°C und 1 Stunde Ausheizen bei Normaldruck unter Stickstoffstrom bei 150°C sowie 2 Stunden Ausheizen bei Normaldruck unter Stickstoffstrom bei 300°C wurde ein weißes Pulver erhalten, das einen Kohlenstoffgehalt von 3.8 Gew.-% und einen Kupfergehalt von 430 Gew.-ppm aufwies.

Die Herstellung der Siliconkautschukprobe unter Verwendung dieser Kieselsäure erfolgte auf die unter 2.1, 3 und 4 beschriebene Weise.

Vergleichsbeispiel 4 (nicht erfindungsgemäß):

Zu 100 g einer pyrogenen Kieselsäure mit einer spezifischen Oberfläche nach BET von 300 m$^2$/g (erhältlich bei Fa. Wacker-Chemie GmbH unter dem Namen Wacker HDK[R] T30) wurden 10 g einer wäßrigen Lösung von 13.3 g/kg Cer(III)-chlorid-Heptahydrat sowie anschließend 45 g Hexamethyldisilazan (erhältlich bei Fa. Wacker-Chemie GmbH unter dem Namen Silazan HMN) bei 25°C zugemischt. Nach 30 Minuten Homogenisieren bei 25°C und 1 Stunde Ausheizen bei Normaldruck unter Stickstoffstrom bei 150°C sowie 1 Stunde Ausheizen bei Normaldruck unter Stickstoffstrom bei 200°C wurde ein weißes Pulver erhalten das einen Kohlenstoffgehalt von 3.7 Gew.-% und einen Cergehalt von 440 Gew.-ppm aufwies.

Die Herstellung der Siliconkautschukprobe unter Verwendung dieser Kieselsäure erfolgte auf die unter 2.2, 3 und 4 beschriebene Weise.

Vergleichsbeispiel 5 (nicht erfindungsgemäß):

Zu 100 g einer pyrogenen Kieselsäure mit einer spezifischen Oberfläche nach BET von 300 m$^2$/g (erhältlich bei

Fa. Wacker-Chemie GmbH unter dem Namen Wacker HDK$^R$ T30) wurden 10 g einer 0.1 n wäßrigen Salzsäure mit einem Gehalt von 24.2 g/kg Eisen(III)-chlorid-Hexahydrat sowie anschließend 16.2 g Hexamethyldisilazan (erhältlich bei Fa. Wacker-Chemie GmbH unter dem Namen Silazan HMN) bei 25°C zugemischt. Nach 30 Minuten Homogenisieren bei 25°C und 1 Stunde Ausheizen bei Normaldruck unter Stickstoffstrom bei 150°C sowie 2 Stunden Ausheizen bei Normaldruck unter Stickstoffstrom bei 300°C wurde ein weißes Pulver erhalten, das einen Kohlenstoffgehalt von 3.5 Gew.-% und einen Eisengehalt von 460 Gew.-ppm aufwies.

Die Herstellung der Siliconkautschukprobe unter Verwendung dieser Kieselsäure erfolgte auf die unter 2.2, 3 und 4 beschriebene Weise.

Beispiel 6:

Entsprechend der in "J.Am.Chem.Soc. (1938), 60, 882" angegebenen Vorschrift wurde Dibenzonitril-Palladium (II)-chlorid hergestellt, dessen Palladiumgehalt zu 27.7 Gew.-% bestimmt wurde. 3.61 g Dibenzonitril-Palladium(II)-chlorid wurden in 50 ml Aceton gelöst und mit 96.39 g eines Dimethylvinylsiloxy-endständigen Polydimethylsiloxans, mit einer Viskosität von 1020 mPa.s bei 25°C, während 2 Stunden innig vermischt. Anschließend wurde das Aceton bei einer Temperatur von 50°C unter Vakuum am Rotationsverdampfer entfernt. Man erhielt eine braun-schwarz gefärbte, stabile Dispersion.

Die Herstellung der Siliconkautschukproben unter Verwendung dieses Palladium-haltigen Hitzestabilisators erfolgte, indem 0, 1, 3 bzw. 5 g Hitzestabilisator mit 200, 199, 197 bzw. 195 g einer zu gleichen Teilen aus A- und B-Komponente bestehenden Flüssigsiliconkautschukmasse, die unter der Bezeichnung Elastosil® LR 3003/50 bei der Fa. Wacker-Chemie GmbH erhältlich ist, vermischt wurden. Diese Mischung wurde, wie unter 4 beschrieben, in einer hydraulischen Presse bei einer Temperatur von 170°C während 15 Minuten zum Siliconkautschuk vernetzt. Die entformten Siliconkautschukfolien wurden in einem Umluft-Trockenschrank 4 Stunden bei 200°C getempert. Man erhielt Siliconkautschuke, deren Palladiumgehalt 0, 50, 150 bzw. 250 Gew.-ppm, bezogen auf elementares Palladium, betrug.

Vergleichsbeispiel 7 (nicht erfindungsgemäß):

20 Masseteile eines Flammrußes (erhältlich bei Fa. Degussa AG unter der Bezeichnung Durex® O Pulver) wurden mit 80 Masseteilen eines Dimethylvinylsiloxy-terminierten Polydimethylsiloxans, das eine Viskosität von 1000 mPa.s bei 25°C besaß, zu einer homogenen Masse vermischt.

Die Herstellung der Siliconkautschukproben unter Verwendung dieses Ruß-haltigen Hitzestabilisators erfolgte, indem 5 g des Hitzestabilisators mit 195 g einer zu gleichen Teilen aus A- und B-Komponente bestehenden Flüssigsiliconkautschukmasse, die unter der Bezeichnung Elastosil® LR 3003/50 bei der Fa. Wacker-Chemie GmbH erhältlich ist, vermischt wurden. Die Mischung wurde, wie unter 4 beschrieben, zum Siliconkautschuk weiterverarbeitet.

Beispiel 8:

In 199.5 g einer zu gleichen Teilen aus A- und B-Komponente bestehenden Flüssigsiliconkautschukmasse, die unter der Bezeichnung Elastosil® LR 3003/50 bei der Fa. Wacker-Chemie GmbH erhältlich ist, wurden 0.5 g feinteiliges Palladium(II)-phthalocyanin durch intensives Mischen auf einer Walze dispergiert. Diese Mischung wurde, wie unter 4 beschrieben, zu einem Siliconkautschuk weiterverarbeitet, welcher 430 Gew.-ppm Palladium enthielt.

Zwecks Vergleich wurde ein entsprechender, das Palladium(II)-phthalocyanin jedoch nicht enthaltender Siliconkautschuk hergestellt.

**2. Herstellung der Grundmasse für hydrosilylierungsvernetzenden Siliconkautschuk:**

Die Herstellung der Grundmasse unter Verwendung der in den Beispielen beschriebenen metall-haltigen Kieselsäuren erfolgte entsprechend ihres Hydrophobierungsgrades.

2.1 Herstellung der Grundmasse unter Verwendung hydrophober Kieselsäure:

240 Masseteile eines Vinyldimethylsiloxy-terminierten Polydimethylsiloxans, das bei 25°C eine Viskosität von 20 Pa.s aufwies, wurden mit 180 Masseteilen des hydrophoben Füllstoffs, der portionsweise zugegeben wurde, während 1 Stunde in einem Doppel-Z-Kneter bei einer Temperatur von 50°C zu einer homogenen Masse vermischt. Anschließend wurde diese hochviskose Masse während 3 Stunden bei 150°C unter Vakuum (<100 mbar) geknetet. Nach dieser Ausheizphase wurden nochmals 150 Masseteile des Vinyl-funktionellen Polydimethylsiloxans eingemischt und die Masse während 1 Stunde bei Raumtemperatur homogenisiert. Es wurde eine ca. 30 Gew.-% Füllstoff enthaltende homogene Grundmasse erhalten.

2.2 Herstellung der Grundmasse unter Verwendung hydrophiler Kieselsäure:

230 Masseteile eines Vinyldimethylsiloxy-terminierten Polydimethylsiloxans, das bei 25°C eine Viskosität von 20 Pa.s aufwies, wurden mit 40 Masseteilen Hexamethyldisilazan (erhältlich bei der Fa. Wacker-Chemie GmbH unter der Bezeichnung Silazan HMN) , 15 Masseteilen Wasser und 140 Masseteilen hydrophiler Kieselsäure, die portionsweise zugegeben und eingemischt wurde, bei Raumtemperatur während 1.5 Stunden in einem Doppel-Z-Kneter zu einer homogenen Masse vermischt.

Zwecks Entfernung flüchtiger Bestandteile und Nebenprodukte, wurde die Mischung anschließend während 3 Stunden bei 150°C unter Vakuum (<100 mbar) geknetet. Nach dieser Ausheizphase wurden weitere 100 Masseteile des Vinyl-funktionellen Polydimethylsiloxans portionsweise eingemischt und die Masse während 1 Stunde bei Raumtemperatur homogenisiert. Es wurde eine ca. 30 Gew.-% Füllstoff enthaltende homogene Grundmasse erhalten.

## 3. Herstellung der A- und B-Komponente der härtbaren Siliconkautschukmasse

Zur Herstellung der A-Komponente der härtbaren Siliconkautschukmasse wurden 100 Masseteile Grundmasse mit 0.2 Masseteilen einer 1 Gew.-% Platin (bezogen auf elementares Platin) enthaltenden Lösung eines Platin-Katalysators (Lösung eines Platin-sym-Divinyltetramethyldisiloxan-Komplexes in einem Dimethylvinylsiloxy-endständigen Polydimethylsiloxan, das bei 25°C eine Viskosität von 1000 mPa.s aufwies; erhältlich bei Fa. Wacker-Chemie GmbH unter der Bezeichnung Katalysator OL) und 0.1 Masseteilen des Inhibitors Ethinylcyclohexanol zu einer homogenen Masse vermischt.

Zur Herstellung der B-Komponente der härtbaren Siliconkautschukmasse wurden 100 Masseteile der nach Verfahren A) oder B) hergestellten Grundmasse mit 3.5 Masseteilen eines Mischpolymerisates aus Dimethylsiloxy-, Methylhydrogensiloxy- und Trimethylsiloxy-Einheiten mit einer Viskosität von 320 mPa.s bei 25°C und 0.48 Gew.-% Si-gebundenem Wasserstoff vermischt.

## 4. Herstellung der vernetzten Siliconkautschuke

Die Herstellung der vernetzten Siliconkautschuke erfolgte dadurch, daß A- und B-Komponente im Verhältnis 1 : 1 auf einer Walze bei einer Temperatur der Walzen von 25°C während 15 Minuten innig vermischt wurden. Diese Mischung wurde anschließend in einer hydraulischen Presse bei einer Temperatur von 170°C während 15 Minuten zum Siliconkautschuk vernetzt. Die entformten, ca. 2 mm bzw. 6 mm dicken Siliconkautschukfolien wurden einer 4 Stunden währenden Temperung bei 200°C in einem Umluft-Trockenschrank unterworfen.

## 5. Mechanische Werte der Siliconkautschuke vor und nach Hitzebeanspruchung

Die Thermostabilität der unter Verwendung der in den Beispielen 1 bis 7 beschriebenen erfindungsgemäßen und nichterfindungsgemäßen Hitzestabilisatoren hergestellten Siliconkautschukproben wurde anhand folgender Kriterien bewertet:

a) Mechanische Elastomereigenschaften, wie Shore-A-Härte (gemäß DIN 53 505), Reißfestigkeit (gemäß DIN 53 504-S1), Reißdehnung (gemäß DIN 53 504-S1) und Weiterreißwiderstand (gemäß ASTM D624), vor und nach thermischer Beanspruchung der Siliconkautschukproben durch offene Lagerung während 50 Stunden bei einer Temperatur von 250°C in einem Umluft-Trockenschrank. Tabelle 1 (Beispiel 1, 2, 3, 4 und 5) verdeutlicht den unterschiedlichen thermostabilisierenden Effekt verschiedener Metalle bei gleicher Applikationsform und vergleichbarem Metallgehalt. Insbesondere ist die höhere thermische Stabilität des Palladium-haltigen Siliconkautschuks erkennbar.

b) Shore-A-Härte (gemäß DIN 53 505) der Siliconkautschukproben vor und nach thermischer Beanspruchung durch offene Lagerung während 10, 20, 30, 40, 50 und 100 Tagen, sofern nicht vorzeitig versprödet, bei einer Temperatur von 250°C in einem Umluft-Trockenschrank (Tabelle 2; Beispiel 1, 3 und 4). Es ist ersichtlich, daß die Versprödungsneigung des Palladium-haltigen Siliconkautschuks deutlich geringer ausgeprägt war, als bei den Kupfer bzw. Cer in vergleichbarer Menge enthaltenden Siliconkautschuken.

c) Betrag des komplexen dynamischen Moduls unter Druckverformung (gemäß DIN 53 513; Vordehnung: -2 %; Dynamische Dehnung: 0.5 %; Meßfrequenz 10 Hz). Die Modulmessungen erfolgten an zylinderförmigen Siliconkautschukprobekörpern (Höhe: 6 mm; Durchmesser: 10 mm), vor und nach thermischer Beanspruchung durch offene Lagerung während 5, 10, 20, 30, 40 und 50 Tagen bei einer Temperatur von 250°C in einem Umluft-Trokkenschrank. Pro Material wurden 5 Probekörper gemessen und der dynamische Modul durch Bildung des arithmetischen Mittelwertes aus den Einzelmessungen bestimmt (Tabelle 3; Beispiel 1, 3 und 4). Der weitgehende Erhalt der Elastizität des Palladium-haltigen Siliconkautschuks bei längerer Lagerzeit bei 250°C wurde durch den wesentlich geringeren Modulanstieg belegt.

d) Prozentualer Gewichtsverlust der unter c) beschriebenen zylinderförmigen Siliconkautschukprobekörper nach thermischer Beanspruchung durch offene Lagerung während 5, 10, 20, 30, 40 und 50 Tagen bei einer Temperatur von 250°C in einem Umluft-Trockenschrank, wobei der prozentuale Gewichtverlust wiederum durch Bildung des arithmetischen Mittelwertes der pro Material vorgenommenen 5 Einzelmessungen erfolgte (Tabelle 4; Beispiel 1, 3 und 4). Der Gewichtsverlust Palladium-haltiger Siliconkautschuke fiel geringer aus.

e) Mechanische Elastomereigenschaften, wie Shore-A, Reißfestigkeit, Reißdehnung und Weiterreißwiderstand (gemäß obiger Prüfvorschriften), vor und nach thermischer Beanspruchung durch offene Lagerung bei 250°C während 3 und 7 Tagen in einem Umluft-Trockenschrank in Abhängigkeit vom Palladiumgehalt des Siliconkautschuks (Tabelle 5; Beispiel 6 und 7). Verdeutlicht wird die Zunahme der Thermostabilität des Siliconkautschuks mit zunehmendem Gehalt an Palladium. Um eine vergleichbare Thermostabilität mit z.B. Ruß zu erzielen, mußten wesentlich größere Mengen an Ruß eingesetzt werden.

f) Mechanische Elastomereigenschaften, wie Shore-A, Reißfestigkeit, Reißdehnung und Weiterreißwiderstand (gemäß obiger Prüfvorschriften), vor und nach thermischer Beanspruchung durch offene Lagerung während 2 und 3 Tagen bei einer Temperatur von 250°C in einem Umluft-Trockenschrank (Tabelle 6; Beispiel 8). Der Palladium-haltige Siliconkautschuk zeichnete sich durch weitgehenden Erhalt der Elastizität (Reißdehnung) sowie der mechanischen Festigkeit (Reißfestigkeit und Weiterreißwiderstand) gegenüber der entsprechenden nichtstabilisierten Siliconkautschukprobe aus.

Tabelle 1: Mechanische Elastomereigenschaften vor und nach therm. Beanspruchung

|  | thermische Belastung | Metallgehalt Siliconkautsch. | Shore-A | Reißfestigk. (N/mm²) | Reißdehnung (%) | Weiterreißwld. (N/mm) |
|---|---|---|---|---|---|---|
| ohne Zusatz | - | 0 ppm | 40 | 8.3 | 610 | 31.9 |
| ohne Zusatz | 50h/250°C | 0 ppm | 52 | 3.2 | 90 | 9.3 |
| Beispiel 1 | - | 135 ppm Pd | 42 | 8.2 | 590 | 31.3 |
| Beispiel 1 | 50h/250°C | 135 ppm Pd | 41 | 7.9 | 380 | 28.6 |
| Beispiel 2 | - | 135 ppm Pd | 41 | 8.0 | 550 | 27.5 |
| Beispiel 2 | 50h/250°C | 135 ppm Pd | 42 | 7.2 | 330 | 23.9 |
| Beispiel 3 | - | 135 ppm Cu | 43 | 7.3 | 540 | 27.8 |
| Beispiel 3 | 50h/250°C | 135 ppm Cu | 42 | 5.4 | 250 | 22.1 |
| Beispiel 4 | - | 135 ppm Ce | 40 | 7.3 | 560 | 33.1 |
| Beispiel 4 | 50h/250°C | 135 ppm Ce | 40 | 7.4 | 350 | 16.9 |
| Beispiel 5 | - | 140 ppm Fe | 43 | 8.4 | 560 | 37.8 |
| Beispiel 5 | 50h/250°C | 140 ppm Fe | 47 | 6.3 | 180 | 10.7 |

Tabelle 2:

| Verlauf der Shore-A während Lagerung bei 250°C | | | | | | | |
|---|---|---|---|---|---|---|---|
| | 0d/250°C | 10d/250°C | 20d/250°C | 30d/250°C | 40d/250°C | 50d/250°C | 100d/250°C |
| ohne Zusatz | 41 | 65 | 87 | spröde | | | |
| Beispiel 1 | 42 | 44 | 47 | 48 | 49 | 51 | 61 |
| Beispiel 3 | 43 | 52 | 58 | 63 | 65 | 68 | 78 |
| Beispiel 4 | 39 | 57 | 63 | 71 | 73 | 75 | 84 |

Tabelle 3:

| Verlauf des Moduls (in MPa) während Lagerung bei 250°C | | | | | |
|---|---|---|---|---|---|
| | 0d/250°C | 5d/250°C | 10d/250°C | 20d/250°C | 30d/250°C |
| ohne Zusatz | 3.05 | 8.36 | 21.04 | 104.01 | spröde |
| Beispiel 1 | 2.90 | 2.79 | 2.76 | 2.91 | 3.09 |
| Beispiel 3 | 3.81 | 3.56 | 3.94 | 5.07 | 6.48 |
| Beispiel 4 | 2.89 | 4.81 | 6.31 | 8.29 | 10.75 |

Tabelle 4:

| Prozentualer Gewichtsverlust während Lagerung bei 250°C | | | | | |
|---|---|---|---|---|---|
| | 5d/250°C | 10d/250°C | 20d/250°C | 30d/250°C | 40d/250°C |
| ohne Zusatz | 3.8 | 7.5 | 10.6 | 13.2 | spröde |
| Beispiel 1 | 1.8 | 2.3 | 2.7 | 3.0 | 3.5 |
| Beispiel 3 | 2.4 | 3.2 | 4.2 | 5.3 | 6.5 |
| Beispiel 4 | 2.9 | 3.8 | 5.9 | 7.1 | 8.2 |

Tabelle 5: Mechanische Elastomereigenschaften vor und nach therm. Beanspruchung

| | thermische Belastung | Metallgehalt Siliconkautsch. | Shore-A | Reißfestigk. (N/mm²) | Reißdehnung (%) | Weiterreißwid. (N/mm) |
|---|---|---|---|---|---|---|
| ohne Zusatz | - | - | 50 | 9.6 | 510 | 38.4 |
| ohne Zusatz | 3d/250°C | - | 58 | 3.7 | 130 | 4.5 |
| | | | | | | |
| Beispiel 6 | - | 50 ppm Pd | 49 | 9.1 | 480 | 38.2 |
| Beispiel 6 | 3d/250°C | 50 ppm Pd | 45 | 6.0 | 270 | 20.9 |
| Beispiel 6 | 7d/250°C | 50 ppm Pd | 49 | 5.6 | 200 | 9.5 |
| | | | | | | |
| Beispiel 6 | - | 150 ppm Pd | 49 | 8.9 | 510 | 39.7 |
| Beispiel 6 | 3d/250°C | 150 ppm Pd | 43 | 6.9 | 330 | 26.9 |
| Beispiel 6 | 7d/250°C | 150 ppm Pd | 45 | 5.6 | 250 | 18.7 |
| | | | | | | |
| Beispiel 6 | - | 250 ppm Pd | 48 | 9.0 | 530 | 35.4 |
| Beispiel 6 | 3d/250°C | 250 ppm Pd | 43 | 7.5 | 380 | 27.1 |
| Beispiel 6 | 7d/250°C | 250 ppm Pd | 44 | 6.4 | 310 | 22.3 |
| | | | | | | |
| Beispiel 7 | - | (0.5 Gew.-% Ruß) | 48 | 8.8 | 520 | 38.2 |
| Beispiel 7 | 3d/250°C | (0.5 Gew.-% Ruß) | 47 | 7.1 | 290 | 22.5 |
| Beispiel 7 | 7d/250°C | (0.5 Gew.-% Ruß) | 50 | 6.2 | 230 | 14.5 |

EP 0 668 325 B1

Tabelle 6:

| | thermische Belastung | Pd-Gehalt Siliconkautsch. | Shore-A | Reißfestigk. (N/mm$^2$) | Reißdehnung (%) | Weiterreißwid. (N/mm) |
|---|---|---|---|---|---|---|
| Mechanische Elastomereigenschaften vor und nach therm. Beanspruchung | | | | | | |
| ohne Zusatz | - | - | 50 | 9.6 | 510 | 38.4 |
| ohne Zusatz | 2d/250°C | - | 55 | 5.8 | 142 | 4.9 |
| ohne Zusatz | 3d/250°C | - | 58 | 3.7 | 130 | 4.5 |
| | | | | | | |
| Beispiel 8 | - | 430 ppm | 51 | 8.1 | 420 | 33.9 |
| Beispiel 8 | 2d/250°C | 430 ppm | 52 | 6.5 | 330 | 28.8 |
| Beispiel 8 | 3d/250°C | 430 ppm | 52 | 6.3 | 310 | 25.6 |

**Patentansprüche**

1. Hydrosilylierungsvernetzende Siliconkautschukmassen enthaltend:

   (I) Hitzestabilisator,

   (II) Polyorganosiloxan mit mindestens zwei Alkenylgruppen pro Molekül,

   (III) Polyorganosiloxan mit mindestens zwei SiH-Gruppen pro Molekül und

   (IV) Platin oder Platinverbindungen enthaltenden Hydrosilylierungskatalysator, dadurch gekennzeichnet, daß der Hitzestabilisator Palladium oder eine Palladiumverbindung oder eine Mischung verschiedener Palladiumverbindungen ist.

2. Hydrosilylierungsvernetzende Siliconkautschukmassen nach Anspruch 1, dadurch gekennzeichnet, daß der (I) Hitzestabilisator ein Palladium enthaltendes Trägermaterial ist.

3. Hydrosilylierungsvernetzende Siliconkautschukmassen nach Anspruch 1 oder 2, wobei der Hitzestabilisator eine Palladium enthaltende Kieselsäure ist.

4. Verwendung von Palladium und dessen Verbindungen zum Schutz von durch Hydrosilylierung vernetzenden Siliconkautschukmassen gegen Versprödung bei Temperaturen oberhalb von 200 °C.

**Claims**

1. Hydrosilylation-crosslinking silicone rubber composition containing

   (I) heat stabilizer,
   (II) polyorganosiloxane having at least two alkenyl groups per molecule,
   (III) polyorganosiloxane having at least two SiH groups per molecule and
   (IV) hydrosilylation catalyst containing platinum or platinum compounds, characterized in that the heat stabilizer is palladium or a palladium compound or a mixture of different palladium compounds.

2. Hydrosilylation-crosslinking silicone rubber compound according to Claim 1, characterized in that the (I) heat stabilizer is a palladium-containing support material.

3. Hydrosilylation-crosslinking silicone rubber compound according to Claim 1 or 2, in which the heat stabilizer is a palladium-containing silicic acid.

4.  Use of palladium and compounds thereof for the protection of hydrosilylation-crosslinking silicone rubber compositions against embrittlement at temperatures above 200°C.


**Revendications**

1.  Compositions d'élastomères de silicone réticulables par hydrosilylation, contenant :

    (I) un stabilisateur thermique;
    (II) un polyorganosiloxane ayant au moins deux groupes alcényle par molécule;
    (III) un polyorganosiloxane ayant au moins deux groupes SiH par molécule, et
    (IV) un catalyseur d'hydrosilylation contenant du platine ou des composés du platine, caractérisées en ce que le stabilisateur thermique est le palladium ou un composé du palladium ou un mélange de différents composés du palladium.

2.  Compositions d'élastomères de silicone réticulables par hydrosilylation suivant la revendication 1, caractérisées en ce que le stabilisateur thermique (I) est un matériau de support contenant du palladium.

3.  Compositions d'élastomères de silicone réticulables par hydrosilylation suivant la revendication 1 ou 2, dans lesquelles le stabilisateur thermique est un acide silicique contenant du palladium.

4.  Utilisation de palladium et de ses composés pour la protection de compositions d'élastomères de silicone réticulables par hydrosilylation contre la fragilisation à des températures supérieures à 200°C.